Europäisches Patentamt

European Patent Office

Office européen des brevets

(19)

(11) Veröffentlichungsnummer: **0 277 308 B1**

# (12) EUROPÄISCHE PATENTSCHRIFT

(45) Veröffentlichungstag der Patentschrift: 03.04.91

(51) Int. Cl.⁵: **B65G 47/91**, B27B 5/06

(21) Anmeldenummer: 87117808.3

(22) Anmeldetag: 02.12.87

(54) Verfahren und Einrichtung zum Abtransport von Plattenteilen, welche in einer Plattensäge abgetrennt wurden.

(30) Priorität: 26.01.87 DE 3702174

(43) Veröffentlichungstag der Anmeldung:
10.08.88 Patentblatt 88/32

(45) Bekanntmachung des Hinweises auf die
Patenterteilung:
03.04.91 Patentblatt 91/14

(84) Benannte Vertragsstaaten:
AT BE CH ES FR GB IT LI NL SE

(56) Entgegenhaltungen:
DE-A- 2 350 735
DE-A- 2 521 125

(73) Patentinhaber: **Jenkner, Erwin**
**Lindenstrasse 13**
**W-7261 Gechingen-Bergwald(DE)**

(72) Erfinder: **Jenkner, Erwin**
**Lindenstrasse 13**
**W-7261 Gechingen-Bergwald(DE)**

(74) Vertreter: **Becker, Maria, Dipl.-Phys.**
**Auf dem Haigst 29**
**W-7000 Stuttgart 70(DE)**

## Beschreibung

Ein Verfahren zum Abtransport von in einer Plattensäge entlang einer Trennebene von einer Werkstückplatte abgetrennten Plattenteilen mit einer Folge von im Oberbegriff des Anspruches 1 aufgeführten Verfahrensschritten ist bereits bekannt. Von einer Werkstückplatte abgetrennte Plattenteile werden nach erfolgtem Trennschnitt hinter der Plattensäge so weit angehoben, dass unmittelbar danach die Werkstückplatte in der Plattensäge in Vorschubrichtung mit grosser Vorschubgeschwindigkeit neu positioniert und zum Abtrennen eines Plattenteils gespannt werden kann. Zwischenzeitlich wird das zuvor abgetrennte bzw. angehobene Plattenteil in Vorschubrichtung weitertransportiert und durch Absenken einer der Plattensäge nachgeschalteten Fördervorrichtung übergeben.

Der Weitertransport einzelner Plattenteile von der Plattensäge zur Fördervorrichtung in Vorschubrichtung erfordert einen verhältnismässig grossen Platzbedarf hinter der Plattensäge. Besonders nachteilig ist jedoch, dass die den Transport einzelner Plattenteile bewerkstelligende Transportvorrichtung nach Ablegen eines Plattenteiles einen verhältnismässig grossen Leerweg entgegen der Vorschubrichtung zurückzulegen hat, so dass sich der Abtransport von Plattenteilen nicht so mit dem Abtrennen von Plattenteilen koordinieren lässt, dass ein taktweises Zusammenspiel zwischem dem Plattentrennen und dem Abtransport von Plattenteilen in zeitlich optimierter Folge erreicht werden kann.

Es ist deshalb die Aufgabe der vorliegenden Erfindung ein Verfahren gemäss dem Oberbegriff des Anspruches 1 so zu verbessern, dass für den Abtransport einzelner Plattenteile zur Fördervorrichtung hinter der Plattensäge ein wesentlich geringerer Raumbedarf sowie erheblich weniger Transportzeit benötigt wird, so dass an der Plattensäge kontimuierlich mit hohen Vorschubgeschwindigkeiten gearbeitet werden kann.

Diese Aufgabe wird erfindungsgemäss durch die kennzeichnenden Merkmale des Patentanspruches 1 gelöst.

Gemäss dem erfindungsgemässen Verfahren werden somit von der Werkstückplatte abgetrennte Plattenteile nach dem Anheben quer zur Vorschubrichtung der Werkstückplatte in Richtung Fördervorrichtung derart wegtransportiert, dass sie neben der zwischenzeitlich in der Plattensäge neu festgelegten Werkstückplatte auf der Fördervorrichtung zur Ablage gelangen, wobei sie, um aus dem Spannbereich der Plattensäge herauszukommen, zugleich zur Werkstückplatte in Vorschubrichtung versetzt abgelegt werden.

Die quer zur Vorschubrichtung gerichtete Transportbewegung verkürzt die Transportzeit für die Plattenteile um ein solches Maß, dass sich deren Übernahme von der Plattensäge mit den Vorschüben der Werkstückplatte in zeitlicher Hinsicht bestmöglichst abstimmen lässt.

Der für den Abtransport der Plattenteile benötigte Raum hinter der Plattensäge lässt sich gemäss Anspruch 2 auf ein Minimum beschränken.

Der verfahrensgemässe Abtransport von Plattenteilen kann mit einer Einrichtung bewerkstelligt werden, die eine Transportvorrichtung in Art eines Kreuzschlittens aufweist, dessen einer Schlitten in Vorschubrichtung und dessen anderer Schlitten hierzu quer verfahren wird, wobei diese Schlittenbewegungen zweckmässig gemeinsam durchgeführt werden. Eine wesentlich vorteilhaftere Konstruktion einer solchen Einrichtung ist Gegenstand des Anspruches 3. In diesem Falle werden die Plattenteile vorzugsweise unter 45° zur Vorschubrichtung in Richtung Fördervorrichtung verlagert.

Bei einer bevorzugten Ausgestaltung dieser Einrichtung ist das mit Saugnäpfen bestückte Hubaggregat gemäss Anspruch 4 mittels eines Kurbeltriebes verfahrbar, der dem Hubaggregat eine sich zunächst beschleunigende und dann im Bereich der Fördervorrichtung wieder verzögernde Transportgeschwindigkeit verleiht.

In der Zeichnung sind Ausführungsbeispiele erfindungsgemässer Einrichtungen zur Durchführung des Verfahrens nach der Erfindung, stark schematisiert, dargestellt.

Es zeigen:

Fig. 1    eine Draufsicht auf eine Plattensäge mit dieser in einer ersten Ausführungsform zugeordneter Einrichtung, deren Transportvorrichtung in ihrer übernahmestellung zum Abtransport eines Plattenteiles auf eine der Plattensäge zugeordnete Fördervorrichtung gezeigt ist;

Fig. 2    eine Darstellung ähnlich Fig. 1, wobei die Transportvorrichtung in ihrer Übergabestellung dargestellt ist;

Fig. 3    einen Teilschnitt durch die Einrichtung entlang der Linie 3-3 der Fig. 1, wobei das Hubaggregat der Transportvorrichtung in seiner angehobenen Ausgangsstellung gezeigt ist;

Fig. 4    eine Darstellung ähnlich Fig. 3, wobei das Hubaggregat in seine Übernahmestellung auf ein Plattenteil abgesenkt worden ist;

Fig. 5    eine Einzelheit aus Fig. 4 in grösserem Maßstab als diese Fig.;

Fig. 6    eine Draufsicht auf eine Plattensäge mit dieser in einer zweiten Ausführungsform zugeordneter Einrichtung, deren Transportvorrichtung in ihrer Übernahmestellung gezeigt ist;

Fig. 7    eine Darstellung ähnlich Fig. 6, wobei die Transportvorrichtung in ihrer Übergabestellung veranschaulicht ist.

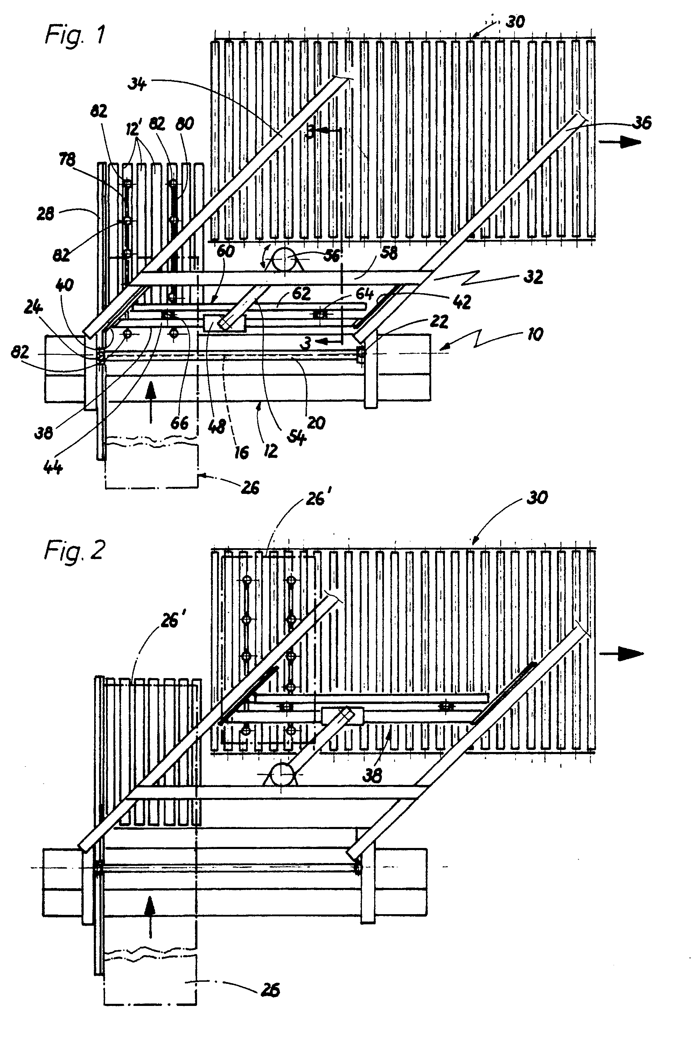

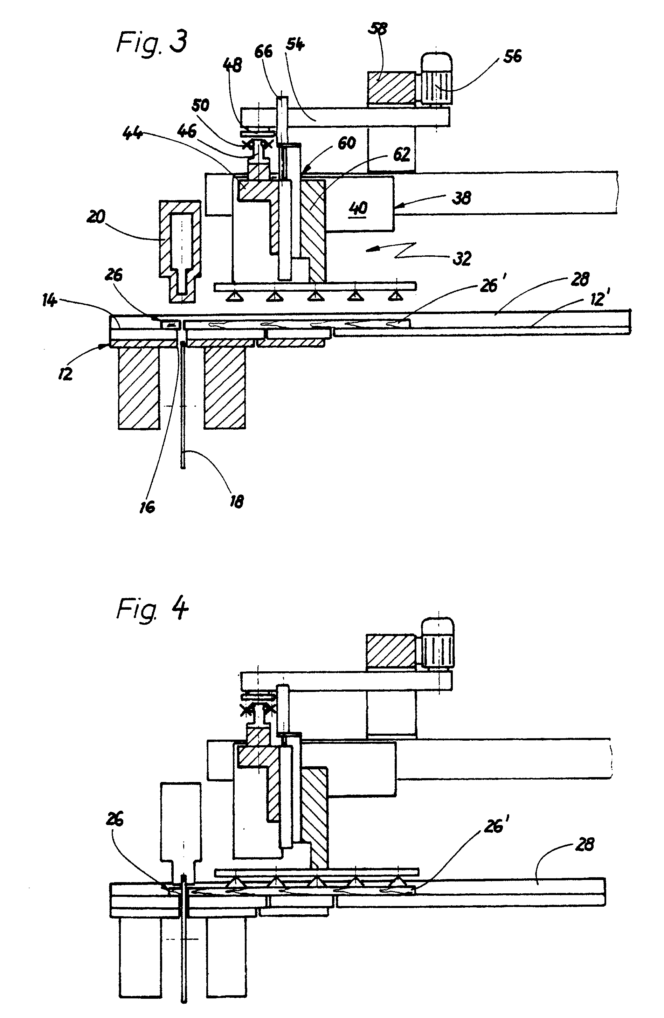

In den Fig. 1 und 2 bezeichnet 10 als Ganzes eine an sich bekannte Plattensäge. Diese besitzt einen Werkstückauflagetisch 12 mit einer horizontalen Auflageebene 14. Im Werkstückauflagetisch 12 erstreckt sich ein Sägeschlitz 16, dem ein unterhalb des Werkstückauflagetisches 12 verfahrbar angeordnetes Sägeaggregat zugeordnet ist, von dem in den Fig. 3 und 4 lediglich ein Kreissägeblatt 18 dargestellt ist. Oberhalb des Sägeschlitzes 16 ist ein Druckbalken 20 vorgesehen, der sich über die gesamte Schlitzlänge erstreckt und mittels an dessen Enden angreifenden, aufrechtstehenden und sich auf dem Werkstückauflagetisch 12 abstützenden Arbeitszylindern 22 und 24 aus einer oberen Freigabestellung (Fig. 3) in eine untere Spannstellung (Fig. 4) zum Spannen einer mittels der Plattensäge 10 aufzuteilenden Werkstückplatte 26 auf dem Werkstückauflagetisch absenkbar bzw. zur Freigabe derselben wieder in die Freigabestellung anhebbar ist. An der Rückseite der Plattensäge 10 weist der Werkstückauflagetisch 12 eine Tischverlängerung 12′ auf. Mit 28 ist ein aus Fig. 1, 3 und 4 ersichtlicher, am Werkstückauflagetisch 12 vorgesehener und sich in Vorschubrichtung erstreckender Seitenanschlag bezeichnet, am dem eine mittels einer nicht dargestellten Vorschubeinrichtung schrittweise in die Plattensäge 10 zu transportierenden Werkstückplatte 26 rechtwinklig zum Sägeschlitz 16 ausrichtbar ist. Mit Hilfe der erwähnten Vorschubvorrichtung wird die Werkstückplatte 26 nach Abtrennen eines Plattenteiles 26′ mit hoher Vorschubgeschwindigkeit von beispielsweise 60 bis 80 m/min. in die Plattensäge 10 eingeschoben und zum Abtrennen eines weiteren Plattenteiles 26′ mittels des Druckbalkens 20 auf dem Werkstückauflagetisch festgelegt.

Nach jedem Trennschnitt mittels des Kreissägeblattes 18 fällt ein Plattenteil 26′ an, das nach seiner Freigabe durch den Druckbalken 20 im Hinblick auf den danach sofort erfolgenden Werkstückplattenvorschub vom Werkstückauflagetisch 12, 12′ zu einer der Plattensäge 10 nachgeschalteten Fördervorrichtung 30 abtransportiert werden muss. Hierzu dient eine der Plattensäge 10 auslaufseitig zugeordnete, oberhalb der Auflageebene 14 des Werkstückauflagetisches 12, 12′ vorgesehene Transportvorrichtung 32. Diese ist derart ausgelegt, dass ein abgetrenntes Plattenteil 26′, bevor der mit hoher Vorschubgeschwindigkeit erfolgende erneute Vorschub der Werkstückplatte 26 erfolgt, von der Auflageebene 14, zu dieser parallel, um einen solchen Betrag angehoben wird, dass die Werkstückplatte 26 unter das Plattenteil 26′ vorgeschoben werden kann, wobei im Verlaufe dieser Vorschubbewegung das Plattenteil 26′ durch die Transportvorrichtung 32 zugleich in Richtung der Fördervorrichtung 30 derart wegbewegt wird, dass es bei Aufliegen auf diese mit einem Teilstück neben die in eine neue Trennstellung vorgeschobene Werkstückplatte 26 zu liegen kommt (s. Fig. 2). Das weiter zu transportierende Plattenteil 26′ wird demgemäss schräg zur Vorschubrichtung der Werkstückplatte 26 abtransportiert und es ist dadurch möglich, die Fördervorrichtung 30 sehr nahe an die Plattensäge 10 heranzurücken und damit den Platzbedarf zur Unterbringung von Transportvorrichtung 32 und Fördervorrichtung 30 auf ein Minimum zu beschränken.

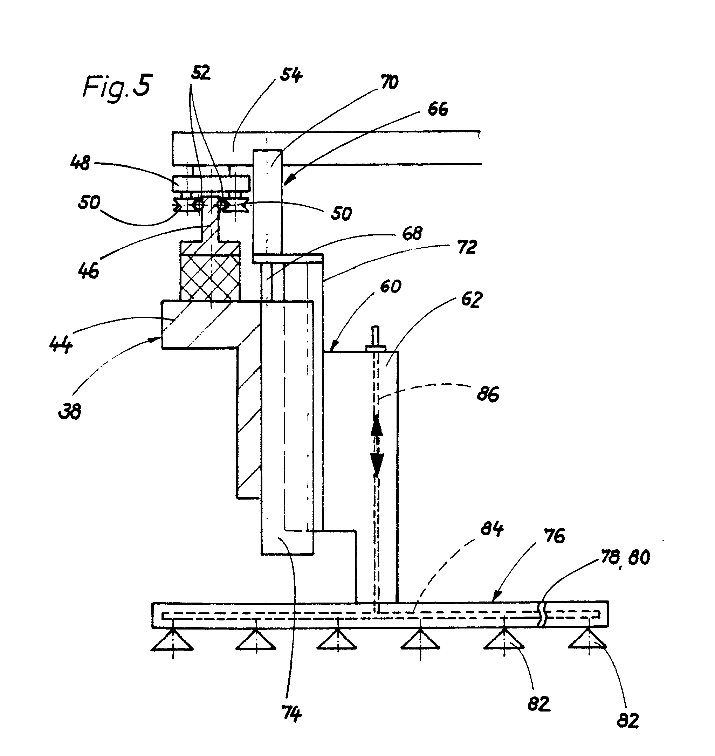

Für den Transport des Plattenteils 26′ weist die Transportvorrichtung 32 einen entlang zweier zueinander paralleler Führungsschienen 34 und 36 verschiebbaren Transportschlitten 38 auf, der mittels seitlichen Schlittenwagen 40 und 42 zwischen den Führungsschienen 34 und 36 entlang dieser geführt ist. Der Transportschlitten 38 weist eine mit ihren Enden an den Schlittenwagen 40 und 42 gehaltene Schlittentraverse 44 auf, die zur Durchführung des Schlittentransportes an ihrer Oberseite einen aufrecht angeordneten Mitnahmesteg 46 trägt, auf dem ein Mitnehmerschlitten 48 in dessen Längsrichtung verschiebbar angeordnet ist. Dies ist beispielsweise mittels am Mitnehmerschlitten 48 drehbar gelagerten Führungsrollen 50 bewerkstelligt, die den Mitnahmesteg 46 seitlich übergreifen und auf an diesem befestigten, im Querschnitt beispielsweise kreisförmigen Führungsprofilen 52 abrollen. Vorzugsweise sind hier bei jeder Seite des Mitnehmersteges 46, gemäss Fig. 5, senkrecht zur Zeicheneebne gesehen, am Mitnehmerschlitten 48 jeweils zwei Führungsrollen 50 in seitlichem Abstand voneinander vorgesehen.

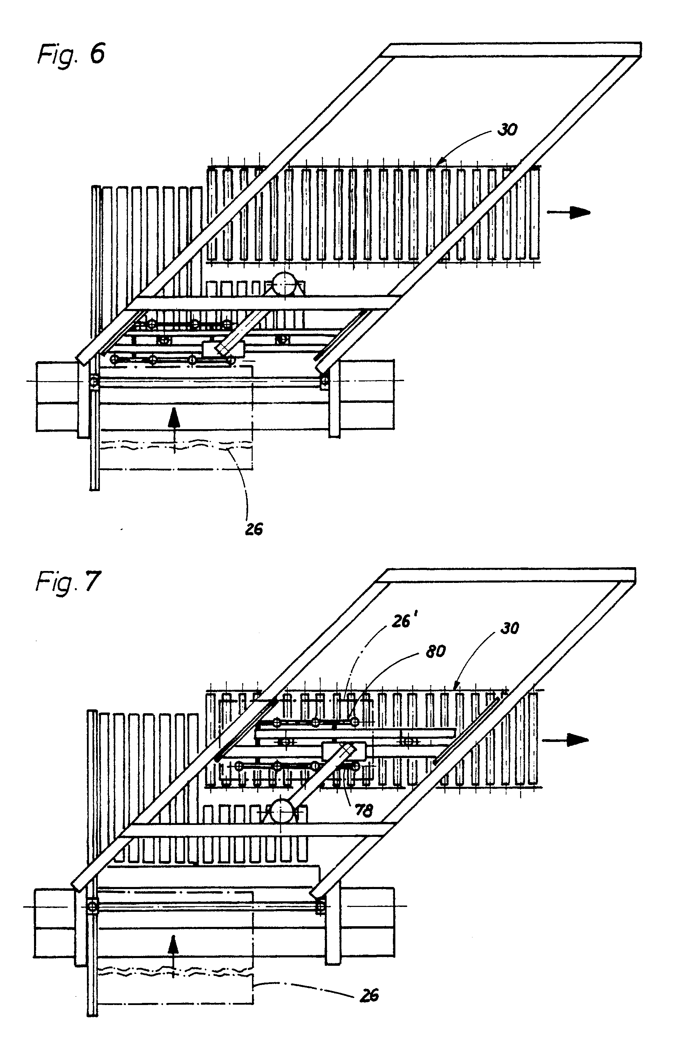

Der Mitnehmerwagen 48 sitzt schwenkbeweglich an der Unterseite eines mit seinem Endstück den Mitnahmesteg 46 übergreifenden Kurbelarmes 54, der seinerseits durch einen Getriebemotor 46 in einander entgegengesetzten Richtungen um 180° verschwenkbar ist und der auf einer auf den Führungsschienen 34 und 36 aufruhenden und mit diesen starr verbundenen Quertraverse 58 sitzt. Die Schlittentraverse 44 trägt an ihrer der Fördervorrichtung 30 zugekehrten Längsseite ein als Ganzes mit 60 bezeichnetes Hubaggregat, mit dessen Hilfe Plattenteile 26′ von der Auflageebene 14 des Werkstückauflagetisches 12 abhebbar und auf die Fördervorrichtung 30 absenkbar sind. Dieses ist gebildet durch einen sich zur Schlittentraverse 44 parallel erstreckenden schienenartigen Träger 62 sowie durch ein Paar von Hubzylindern 64 und 66, die sich beispielsweise mit ihrer Kolbenstange 68 (Fig. 5) an der Schlittentraverse 44 abstützen und an deren Zylinderteil 70 ein am Träger 62 gehaltener Führungskörper 72 befestigt ist, der in einem Führungsbett 74 der Schlittentraverse 44 vertikal verschiebbar geführt ist. Bei Zuführen eines Druckmediums, beispielsweise Luft, in den Zylinderteil 70 der Hubzylinder 64, 66 wird dieser relativ zu einem auf der Kolbenstange 68 sitzenden Kolben nach unten oder ausschliesslich nach oben gesteuert, wodurch der Träger 62 in vertikaler Richtung nach unten und/oder nach oben relativ zur Schlittentraverse 44 bewegt wird. An der Unterseite des schienenartigen Trägers 62 sitzt ein als Ganzes mit 76 bezeichneter Saugkopf, der beispielsweise zwei in seitlichem Abstand voneinander angeordnete Tragleisten 78, 80 trägt, die an ihrer Unterseite mit einer Vielzahl von Saufnäpfen 82 ausgestattet sind. Die beiden Tragleisten 78, 80 sind, bezogen auf die Längserstreckung der von der Werkstückplatte 26 abzutrennenden Plattenteile 26′, derart angeordnet, dass sie sich jeweils parallel zur Längsmittenebene der Plattenteile 26′ erstrecken. Gemäss Fig. 1 und 2 erstrecken sich die Tragleisten 78, 80 hierbei in Vorschubrichtung, sofern die aufzuteilende Werkstückplatte 26 verhältnismässig schmal ausgebildet ist, während sie sich bei der Konstruktion gemäss den Fig. 6 und 7 quer zur Vorschubrichtung erstrecken, da in diesem Falle die aufzuteilende Werkstückplatte 26 verhältnismässig breit dimensioniert ist.

Die einzelnen Saugnäpfe 82 sind an einen in den Tragleisten 78, 80 verlaufenden Saugkanal 84 angeschlossen, der über einen im schienenartigen Träger 62 angeordneten Anschlusskanal 86 mit einer Druckquelle zur Erzeugung eines Unterdruckes verbindbar ist.

Die erfindungsgemässe Einrichtung arbeitet folgendermassen:

Es sei angenommen, wie Fig. 1 zeigt, dass sich die Transportvorrichtung 32 in ihrer Übernahmestellung befindet (Fig. 1 und 3), in welcher eine Werkstückplatte 26 in die Plattensäge 10 zum Positionieren für den ersten Trennschnitt mit relativ grosser Vorschubgeschwindigkeit eingeschoben wird. Nach erfolgtem Einschub senken sich Durckbalken 20 und Hubaggregat 60 in Richtung Werkstückplatte 26 nach unten, wobei sich die Saugnäpfe 82 des Hubaggregates 60 an der Oberseite der Werkstückplatte 26 festsaugen. Sobald der Trennschnitt zum Abtrennen eines ersten Plattenteiles 26′ durchgeführt ist, wird der Druckbalken 20 wieder in seine Freigabestellung nach oben gesteuert, wobei unmittelbar nach erfolgter Freigabe von Werkstückplatte 26 und Plattenteil 26′ das Hubaggregat 60 der Transportvorrichtung 32 nach oben gesteuert und dadurch Plattenteil 26′ von der Auflageebene 14 so weit abgehoben wird, dass danach der Werkstückplatte 26 sofort eine weitere, mit hoher Geschwindigkeit durchzuführenden Vorschubbewegung erteilt werden kann. Dieser Vorschub erfolgt zu einem Zeitpunkt, in dem sich Plattenteil 26′ zum grössten Teil noch oberhalb der Werkstückplatte 26 befindet, wobei während der Transportbewegung der Transportvorrichtung 32 entlang der Führungsschienen 34, 36 sich der Druckbalken 20 bereits wieder in seine Spannstellung absenkt und ein weiterer Trennschnitt erfolgt. Der die Transportbewegung der Transportvorrichtung 32 bewerkstelligende Kurbelarm 54 führt, wie die Fig. 1 und 2 zeigen, eine 180°-Schwenkbewegung aus, wobei in der Anfangsphase der Transportbewegung die Transportvorrichtung 32 beschleunigt und gegen Ende der Transportbewegung bis auf 0 verzögert wird. Die Transportbewegung erfolgt hierbei in Abstimmung mit der Vorschubbewegung der Werkstückplatte 26 und dem Trennschnitt mit solcher Geschwindigkeit, dass nach jedem erfolgten Trennschnitt das vorliegende Plattenteil 26′ sofort wieder von der Auflageebene 14 abgehoben wird, um für einen erneuten Vorschub der Werkstückplatte 26 den Weg freizumachen.

Wie aus Fig. 2 ersichtlich ist, wird durch die Schrägführung der Transportvorrichtung 32, bezogen auf die Vorschubrichtung der Werkstückplatte 26, erreicht, dass Plattenteil 26′, bezogen auf dessen Abhebestellung auf dem Werkstückauflagetisch 12, 12′, in Vorschubrichtung versetzt auf die Förderrichtung 30 derart abgelegt wird, dass sich das Plattenteil 26′ über ein Teilstück seiner Länge neben der auf dem Werkstückauflagetisch 12, 12′ neu eingestellten Werkstückplatte 26 befindet. Die erfindungsgemässe Einrichtung ermöglicht somit einen schnellen Abtransport von Plattenteilen 26′ und die Durchführung eines lediglich sehr kurz bemessenen Transportweges, wobei für die Einrichtung und die Fördervorrichtung 30 hinter der Plattensäge 10 verhältnismässig wenig Raum beansprucht wird.

## Ansprüche

1. Verfahren zum Abtransport von in einer Plattensäge (10) entlang einer Trennebene von einer Werkstückplatte (26) abgetrennten Plattenteilen (26′), bei dem ein Plattenteil nach erfolgtem Trennschnitt über die Auflageebene (14) angehoben, zu dieser parallel und Weg von der Trennebene zu einer Fördervorrichtung (30) transportiert und dieser durch Absenken übergeben wird, wobei nach Abheben des Plattenteils die Werkstückplatte in der Plattensäge in eine neue Bearbeitungsstellung mit einer Vorschubgeschwindigkeit weitertransportiert wird, die grösser ist als die Geschwindigkeit, mit der das Plattenteil der Fördervorrichtung zugefördert wird,
**dadurch gekennzeichnet,**
dass das Plattenteil (26′) nach erfolgtem Vor-

schub der in der Plattensäge (10) in einer neuen Trennstellung festgelegten Werkstückplatte (26), zu dieser seitlich und in Vorschubrichtung versetzt, auf die Fördervorrichtung (30) aufgelegt wird.

2. Verfahren nach Anspruch 1, dadurch gekennzeichnet, dass das auf die Fördervorrichtung (30) abgelegte Plattenteil (26′) in Richtung der Trennebene abtransportiert wird.

3. Verfahren nach Anspruch 1 oder 2, dadurch gekennzeichnet, dass das Plattenteil (26′) durch Ansaugen von der Auflageebene (14) abgehoben wird.

4. Einrichtung zur Durchführung des Verfahren nach einem der vorhergehenden Ansprüche, gekennzeichnet durch eine oberhalb der Werkstückauflageebene (14) der Plattensäge (10) angeordnete Transportvorrichtung (32), die ein insbesondere mit Saugnäpfen (82) ausgestattetes Hubaggregat (60) aufweist, das schräg, insbesondere unter 45°, zur Vorschubrichtung und parallel zur Auflageebene (14) verfahrbar ist.

5. Einrichtung nach Anspruch 4, dadurch gekennzeichnet, dass das Hubaggregat (60) mittels eines Kurbeltriebes (48, 54, 56) schräg zur Vorschubrichtung der Werkstückplatte (26) verfahrbar ist.


## Claims

1. Method for transporting away panel parts (26') which have been cut off a workpiece panel (26) along a cutting plane on a panel saw (10), wherein a panel part is lifted above the plane of support (14) after a cut has been made, transported parallel to said plane of support and away from said cutting plane to a conveying device (30) and transferred to said conveying device by being lowered, and wherein after lift-off of said panel part, said workpiece panel on said panel saw is transported further into a new machining position at an advancing speed which is greater than the speed at which said panel part is delivered to said conveying device,
   **characterised in that**
   after said workpiece panel (26) has been advanced and fixed in a new cutting position on said panel saw (10), said panel part (26') is deposited on said conveying device (30) in laterally offset relation to said workpiece panel and in offset relation to the direction of advance.

2. Method as defined in claim 1, characterised in that said panel part (26') deposited on said conveying device (30) is transported away in the direction of said cutting plane.

3. Method as defined in claim 1 or 2, characterized in that said panel part (26') is lifted off said plane of support (14) by suction.

4. Apparatus for performing the method as defined in one of the preceding claims, characterised by a transporting device (32) arranged above said workpiece support plane (14) of said panel saw (10) and comprising a lifting unit (60) which, in particular, is equipped with suction members (82) and which is displaceable at an incline, in particular, at 45 degrees to said direction of advance and parallel to said plane of support (14).

5. Apparatus as defined in claim 4, characterised in that said lifting unit (60) is displaceable by a crank drive (48, 54, 56) at an incline to said direction of advance of said workpiece panel (26).


## Revendications

1. Procédé de transport-enlèvement de parties de panneau séparées (26'), dans une scie à panneaux (10), le long d'un plan de séparation d'une pièce-panneau (26), dans lequel, après exécution de la coupe séparatrice, une partie de panneau est levée au-dessus du plan d'appui (14), transportée parallèlement à celui-ci, en étant éloignée du plan de coupe, jusqu'à un dispositif transporteur (30) auquel elle est transférée, la pièce-panneau dans la scie à panneaux étant transportée, après enlèvement de la partie de panneau, à une nouvelle position de travail avec une vitesse d'avance qui est plus grande que la vitesse avec laquelle la partie de panneau est amenée au dispositif de transport,
   caractérisé
   par le fait qu'après exécution de l'avance de la pièce-panneau (26) immobilisée à une nouvelle position dans la scie à panneaux (10), la partie de panneau (26') est déposée sur le dispositif de transport (30), latéralement par rapport à la pièce-panneau et avec décalage dans la direction d'avance.

2. Procédé selon revendication 1, caractérisé par le fait que la partie de panneau (26') déposée sur le dispositif de transport (30) est évacuée-transportée suivant la direction du plan de séparation.

3. Procédé selon revendication 1 ou 2, caractérisé par le fait que la partie de panneau (26') est levée hors du plan d'appui (14) par aspiration.

4. Dispositif de mise en oeuvre du procédé selon l'une quelconque des revendications précédentes, caractérisé par un dispositif transporteur (32) agencé au-dessus du plan d'appui des pièces (14) de la scie à panneaux (10), ce dispositif transporteur présentant un groupe de levage (60) notamment équipé de ventouses (82), lequel groupe peut être déplacé obliquement, notamment à 45°, par rapport au dispositif d'avance et parallèlement au plan d'appui (14).

5. Dispositif selon revendication 4, caractérisé par le fait que le groupe de levage (60) est déplaçable obliquement par rapport à la direction d'avance de la pièce-panneau (26), au moyen d'un mécanisme à manivelle (48, 54, 56).

Fig. 1

Fig. 2

Fig. 3

Fig. 4

Fig.5

Fig. 6

Fig. 7